# EUROPEAN PATENT APPLICATION

(11) **EP 2 644 674 A2**
(43) Date of publication of application: **02.10.2013**
(21) Application number: 11842632.9
(22) Date of filing: 14.11.2011
(51) Int. Cl.: C09J 133/04, C09J 11/06, C09J 7/02, G06F 3/00

(54) **ADHESIVE COMPOSITION FOR TOUCH PANEL, ADHESIVE FILM, AND TOUCH PANEL**

(30) Priority: 24.11.2010 KR 20100117764
(71) Applicant: LG Hausys, Ltd., Seoul 150-721 (KR)
(72) Inventor: KIM, Jang-Soon, Seongnam-si Gyeonggi-do 463-889 (KR); SONG, Min-Seok, Gyeonggi-do 431-080 (KR); PARK, Eun-Kyung, Seoul 122-881 (KR); KIM, Seong-Jin, Suwon-si Gyeonggi-do 443-801 (KR); CHA, Hyung-Min, Cheongju-si Chungcheongbuk-do 361-300 (KR); LEE, Won-Yup, Cheongju-si Chungcheongbuk-do 361-856 (KR); KIM, Woong-Gi, Cheongju-si, Chungcheongbuk-do 361-856 (KR)
(74) Representative: Zacco Denmark A/S
(86) International application number: PCT/KR2011/008673
(87) International publication number: WO 2012/070796

(57) **Abstract**

The present invention relates to an adhesive composition for a touch panel, an adhesive film, and a touch panel. When coupled to the touch panel, for example, to a conductive layer and to a hard coating surface of an electrostatic capacitive touch panel, the present invention has superior durability, such as resistance to peeling, detaching, or air bubbles under high-temperature and high-humidity conditions, and can provide an adhesive composition or adhesive agent also having superior workability, wettability, and adhesion to various objects to be adhered.

## Description

### [Technical Field]

The present invention relates to an adhesive composition for a touch panel, an adhesive film, and a touch panel.

### [Background Art]

Recently, the market for electronic equipment, such as personal digital assistants (PDAs), mobile communication terminals, or automotive navigation systems, is growing. Such electronic equipment is moving towards slimness, light weight, low power consumption, high resolution, and high brightness.

An electronic device equipped with a touchscreen or touch panel switch as an input device uses a transparent conductive plastic film in consideration of weight and durability. An example of the transparent conductive plastic film is a polyethylene terephthalate (PET) base film having a conductive layer of indium tin oxide (ITO) formed on one side thereof, which is stacked on conductive glass, a reinforcing material, or a decorative film through an adhesive film.

An adhesive used to attach a transparent conductive film in a touchscreen or touch panel is required to have various physical properties, such as surface leveling properties for relieving an uneven surface due to a decorative film, durability for suppressing generation of curls or bubbles when exposed to severe conditions, e.g., high temperature or high humidity, cuttability for preventing the adhesive from sticking out or being squeezed when cut, and excellent adhesion and wettability to various substrates as well as cohesiveness.

Particularly, in manufacture of a touch panel or touchscreen, a process of curing an adhesive composition or a process of bonding anisotropic conductive foil (ACF) in assembly of a printed circuit board (PCB) is carried out at high temperature. In these processes, a decrease in heat resistance of an adhesive composition or adhesive may cause air pockets, bubbles, separation, or curls between the adhesive and an adherend (e.g., a transparent conductive film).

### [Disclosure]

### [Technical Problem]

The present invention is aimed at providing an adhesive composition for a touch panel, an adhesive film, and a touch panel.

### [Technical Solution]

In accordance with one aspect of the present invention, an adhesive composition for a touch panel includes: a partially polymerized acrylic resin; a multifunctional crosslinking agent; and an epoxy silane coupling agent.

In accordance with another aspect of the present invention, an adhesive film for a touch panel includes: a base film; and an adhesive layer formed on one or both sides of the base film and including a cured product of the adhesive composition according to the present invention.

In accordance with a further aspect of the present invention, a touch panel includes: a conductive plastic film having a conductive layer formed on one surface thereof; and an adhesive layer attached to the conductive layer of the conductive plastic film and including a cured product of the adhesive composition of the present invention.

### [Advantageous Effects]

According to the present invention, an adhesive composition for a touch panel or an adhesive has excellent wettability and adhesion to various objects, workability and durability, and does not cause separation, bubbles, and curls when applied to an electrostatic capacitive touch panel.

### [Description of Drawings]

Fig. 1 is a sectional view of an adhesive film according to one embodiment of the present invention.
Fig. 2 is a sectional view of an adhesive film according to another embodiment of the present invention.
Fig. 3 illustrates a touch panel according to one embodiment of the present invention.
Fig. 4 illustrates a touch panel according to another embodiment of the present invention.

### [Best Mode]

The present invention relates to an adhesive composition for a touch panel which includes a partially polymerized acrylic resin; a multifunctional crosslinking agent; and an epoxy silane coupling agent.

Hereinafter, the adhesive composition for the touch panel will be described in detail.

The adhesive composition according to the present invention includes a partially polymerized acrylic resin, a multifunctional crosslinking agent, and an epoxy silane coupling agent.

The partially polymerized acrylic resin has a weight average molecular weight of 1,000,000 or higher, preferably 1,000,000 to 1,500,000. In the present invention, weight average molecular weight is based on a polystyrene standard, measured by gel permeation chromatography (GPC). If the partially polymerized acrylic resin has a weight average molecular weight of 1,000,000 or higher, an adhesive can have excellent durability under high-temperature or high-humidity conditions and does not contaminate an object by transfer to the object in re-peeling.

In the present invention, the partially polymerized acrylic resin has a mixed state of a pre-polymer and a monomer. The pre-polymer is a polymer in an intermediate state, which is capable of undergoing further polymerization.

The partially polymerized acrylic resin has a degree of polymerization of 5 to 60%, preferably 10 to 35%. In the present invention, the degree of polymerization refers to a weight ratio of monomers polymerized into polymers to monomers used in polymerization. If the degree of polymerization is less than 5%, the coatability of the adhesive can decrease due to low viscosity. If the degree of polymerization is greater than 60%, the viscosity of the adhesive can increase, thereby deteriorating processability.

There is no particular restriction as to a composition of the partially polymerized acrylic resin. In the present invention, the acrylic resin may be, for example, a polymer of a monomer mixture including a (meth)acrylic acid ester monomer and a crosslinking monomer.

There is no particular restriction as to the kind of the (meth)acrylic acid ester monomer, which may include, for example, alkyl (meth)acrylates. In this case, when too long of an alkyl group is included in the monomer, the cohesiveness of the cured product may decrease and the glass transition temperature or tack of the cured product may not be properly adjusted. Thus, alkyl (meth)acrylates having a C1 to C14, preferably C1 to C8, alkyl group are used. Examples of such monomers may include methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isobornyl (meth)acrylate, or isononyl methacrylate, which may be used alone or as mixtures.

The crosslinking monomer included in the monomer mixture is a monomer including both a copolymerizable functional group (e.g., carbon-carbon double bond) and a crosslinking functional group and may provide a polymer with a crosslinking functional group reacting with the multifunctional crosslinking agent.

Examples of the crosslinking monomer may include a hydroxyl group containing monomer, a carboxylic group containing monomer, or a nitrogen containing monomer, which may be used alone or as mixtures. Examples of the hydroxyl group containing monomer may include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate, or 2-hydroxypropylene glycol (meth)acrylate, without being limited thereto. Examples of the carboxylic group containing monomer may include acrylic acid, methacrylic acid, 2-(meth)acryloyloxy acetic acid, 3-(meth)acryloyloxy propyl acid, 4-(meth)acryloyloxy butyl acid, an acrylic acid dimer, itaconic acid, or maleic acid, without being limited thereto. Examples of the nitrogen containing monomer may include 2-isocyanatoethyl (meth)acrylate, 3-isocyanatopropyl (meth)acrylate, 4-isocyanatobutyl (meth)acrylate, (meth)acryl amide, N-vinylpyrrolidone, or N-vinylcaprolactam, without being limited thereto.

In the present invention, the monomer mixture includes 70 to 99.9 parts by weight of the (meth)acrylic acid ester monomer and 0.1 to 30 parts by weight of the crosslinking monomer, preferably 75 to 99.9 parts by weight of the (meth)acrylic acid ester monomer and 0.1 to 25 parts by weight of the crosslinking monomer. Within this range, the adhesive can have excellent reliability, handling properties, durability, and re-peeling properties and can effectively prevent separation or peeling due to decrease in initial adhesive strength.

Unless otherwise indicated in the specification, "parts by weight" denotes "ratio by weight."

In the present invention, there is no particular restriction as to a method of manufacturing the acrylic resin by polymerizing the monomer mixture including the foregoing ingredients. For example, a general polymerization method, such as solution polymerization, photo-polymerization, bulk polymerization, suspension polymerization, or emulsion polymerization, may be used.

The adhesive composition for the touch panel of the present invention may include the multifunctional crosslinking agent along with the acrylic resin, and cohesiveness or tack of the cured product may be adjusted based on the amount of the multifunctional crosslinking agent.

The multifunctional crosslinking agent used in the present invention may include, without being limited to, for example, multifunctional (meth)acrylates. The multifunctional (meth)acrylates are polymeric compounds containing at least two (meth)acrylate moieties.

Examples of multifunctional (meth)acrylates may include at least one selected from the group consisting of hexanediol di(meth)acrylate, trimethylolpropanetrioxyethyl di(meth)acrylate, alkylene glycol di(meth)acrylate, dialkylene glycol di(meth)acrylate, trialkylene glycol di(meth)acrylate, dicyclopentenyl di(meth)acrylate, dicyclopentenyloxyethyl di(meth)acrylate, neopentyl glycol di(meth)acrylate, dipentaerythritolhexa di(meth)acrylate, trimethylolpropane tri(meth)acrylate, and pentaerythritol tri(meth)acrylate, without being limited thereto.

In the present invention, the multifunctional crosslinking agent is present in an amount of 0.01 to 10 parts by weight, preferably 0.05 to 5 parts by weight, more preferably 0.1 to 3 parts by weight based on 100 parts by weight of the partially polymerized acrylic resin. If the amount of the multifunctional crosslinking agent is less than 0.01 parts by weight, the cohesiveness of the cured product may be reduced, causing bubbles under high-temperature conditions. If the amount of the multifunctional crosslinking agent is greater than 10 parts by weight, the adhesive is excessively cured, causing decrease in adhesive strength and peel strength. Thus, peeling or separation between layers may occur, reducing durability.

The adhesive composition of the present invention may also include an epoxy silane coupling agent. The coupling agent functions to enhance adhesive stability and adhesion of the cured product to an object, thus improving heat resistance and moisture resistance. Also, the coupling agent may enhance adhesive reliability of the cured product when the cured product is exposed to high-temperature and/or high-humidity conditions for a long time.

There is no particular restriction as to the kind of the epoxy silane coupling agent, and examples of the epoxy silane coupling agent may include at least one selected from the group consisting of γ-glycidoxypropyltrimethoxysilane, γ-glycidoxypropylmethyldiethoxysilane, γ-glycidoxypropyltriethoxysilane, and 2-(3,4-epoxycyclohexyl)-ethyltrimethoxysilane.

In the present invention, the epoxy silane coupling agent may be present in an amount of 0.1 to 1 part by weight based on 100 parts by weight of the partially polymerized acrylic resin. If the amount of the coupling agent is less than 0.1 parts by weight, tack may not effectively increase. If the amount of the coupling agent exceeds 1 part by weight, bubbles or peeling of the adhesive may occur, thus deteriorating durability.

The adhesive composition of the present invention may further include a photoinitiator in order to adjust the degree of polymerization of the adhesive. The photoinitiator is present in an amount of 0.01 to 10 parts by weight, preferably 0.1 to 5 parts by weight based on 100 parts by weight of the partially polymerized acrylic resin.

There is no particular restriction as to the kind of the photoinitiator so long as the photoinitiator generates radicals upon light irradiation to initiate polymerization. Examples of the photoinitiator may include benzoin, hydroxyketone, or aminoketone initiators, specifically benzoin, benzoin methyl ether, benzoin ethyl ether, benzoin isopropyl ether, benzoin n-butyl ether, benzoin isobutyl ether, acetophenone, dimethylaminoacetophenone, a,a-methoxy-a-hydroxyacetophenone, 2,2-dimethoxy-2-phenylacetophenone, 2,2-diethoxy-2-phenylacetophenone, 2-hydroxy-2-methyl-1-phenylpropane-1-one, 1-hydroxycyclohexyl phenyl ketone, 2-methyl-1-[4-(methylthio)phenyl]-2-morpholino-propane-1-one, 4-(2-hydroxyethoxy)phenyl-2-(hydroxy-2-propyl)ketone, benzophenone, 4,4'-diethylaminobenzophenone, dichlorobenzophenone, 2-methylanthraquinone, 2-ethylanthraquinone, 2-t-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyl dimethyl ketal, acetophenone dimethyl ketal, and oligo {2-hydroxy-2-methyl-1[4-(1-methylvinyl)phenyl]propanone}, without being limited thereto. These initiators may be used alone or as mixtures.

As used herein, the term "light irradiation" refers to electromagnetic irradiation which affects the photoinitiator or the polymeric compound to cause polymerization. Electromagnetic radiation includes not only microwaves, infrared radiation, ultraviolet radiation, X-rays, and γ-rays but also particle beams, such as α-particle rays, proton beams, neutron beams, and electron beams.

The adhesive composition of the present invention may further include a tackifier resin in view of adjusting tack performance.

Examples of the tackifier resin may include, without being limited to, for example, a hydrocarbon resin or a hydrogenated product thereof; a rosin or a hydrogenated product thereof; a rosin ester resin or a hydrogenated product thereof; a terpene resin or a hydrogenated product thereof; a terpene phenolic resin or a hydrogenated product thereof; and a polymerized rosin resin or a polymerized rosin ester resin, which may be used alone or as mixtures.

The tackifier resin may be present in an amount of 1 to 100 parts by weight based on 100 parts by weight of the acrylic resin. If the amount of the tackifier resin is less than 1 part by weight, the tackifier resin may not function properly. If the amount of the tackifier resin exceeds 100 parts by weight, improvement in compatibility and/or cohesiveness may be insignificant.

In addition, the adhesive composition of the present invention may further include at least one additive selected from the group consisting of epoxy resins, crosslinking agents, UV stabilizers, antioxidants, toning agents, reinforcing agents, fillers, antifoaming agents, surfactants, and plasticizers so long as the additive does not affect the advantageous effects of the present invention.

The present invention also relates to an adhesive film for a touch panel which includes a base film and an adhesive layer formed on one or both sides of the base film and including a cured product of the adhesive composition according to the present invention.

Fig. 1 is a sectional view of an adhesive film 10 according to one embodiment of the present invention. As shown in Fig. 1, the adhesive film 10 may include a base film 11 and adhesive layers 12 formed on opposite sides of the base film 11. However, the adhesive film of Fig. 1 is provided for illustrative purposes only. That is, in an adhesive film of the present invention, an adhesive layer may be formed on only one side of a base film, or only a sheet-type adhesive layer may be present without a base film as necessary.

There is no particular restriction as to a method of manufacturing the adhesive layers by curing the adhesive composition. In the present invention, for example, the adhesive composition or a coating solution prepared using the same is applied to a proper substrate using a general instrument, e.g., a bar coater, and cured, thereby preparing an adhesive layer.

Curing may be carried out after volatile components or reaction residues included in the adhesive composition or the coating solution, which cause bubbles, are thoroughly removed. Accordingly, decrease in the coefficient of elasticity of the adhesive due to too low a crosslinking density or molecular weight may be prevented. Also, it is possible to prevent a problem that bubbles between adhesive layers at high temperature grow larger and form scatterers.

There is no particular restriction as to a method of curing the adhesive composition or the coating solution. For example, curing may be carried out by properly heating the coating layer or aging the coating layer under predetermined conditions.

In the adhesive film, the adhesive layer has a thickness of 50 to 300 µm, preferably 100 to 200 µm. Within this range, the adhesive film can be applied to a thin touch panel or touchscreen, have excellent durability, adhesion, and wettability, and suppress separation and bubbles.

There is no particular restriction as to the kind of the base film used in the present invention, and typical plastic films known in the art may be used. Examples of the base film may include at least one selected from the group consisting of a polyethylene terephthalate (PET) film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acetate copolymer film, an ethylene-methyl acetate copolymer film, and a polyimide film. Preferably, a PET film is used, without being limited thereto.

In the adhesive film, the based film has a thickness of 25 to 300 µm, preferably 30 to 200 µm. Within this range, the adhesive film can be applied to a thin touch panel or touchscreen, exhibit excellent durability, adhesion, and wettability, and prevent separation or bubbles.

The adhesive film of the present invention may further include a release film formed on the adhesive layers as necessary.

Fig. 2 is a sectional view of an adhesive film 20 according to another embodiment of the present invention. As shown in Fig. 2, the adhesive film 20 may include a base film 11, adhesive layers 12 formed on opposite sides of the base film 11, and release films 21a and 21b formed on the adhesive layers 12.

There is no particular restriction as to the kind of the release films used in the present invention. In the present invention, for example, one surface of various plastic films used as the base film may be subjected to proper release treatment for use as a release film. In this case, examples of a release agent used for release treatment may include alkyd, silicone, fluorine, unsaturated ester, polyolefin, or wax release agents. Among these, alkyd, silicone, and fluorine release agents may be used in view of heat resistance, without being limited thereto.

The thickness of the release film is not particularly limited but may be adjusted properly depending on purpose. For example, the release film has a thickness of 10 to 100 µm, preferably 30 to 90 µm, and more preferably about 40 to 80 µm.

The present invention also relates to a touch panel which includes a conductive plastic film having a conductive layer formed on one surface thereof; and an adhesive layer attached to the conductive layer of the conductive plastic film and including a cured product of the adhesive composition of the present invention.

The touch panel employing the adhesive composition according to the present invention may be, for example, an electrostatic capacitive touch panel. Further, the touch panel may be provided in any general structure by any general formation method, without being particularly limited, so long as the adhesive composition of the present invention is applied to the touch panel.

Figs. 3 and 4 are sectional views of touch panels 30 and 40 according to exemplary embodiments of the present invention.

As shown in Fig. 3, the touch panel 30 according to one embodiment of the present invention may include a conductive plastic film 31 including a plastic substrate 31a and a conductive layer 31b formed on one surface of the substrate 31a; and an adhesive layer including a cured product of the adhesive composition of the present invention attached to the conductive layer 31b of the conductive plastic film 31.

There is no particular restriction as to the kind of the conductive plastic film, and any conductive film known in the art may be used. In one embodiment of the present invention, the conductive film may be a transparent plastic film having an indium tin oxide (ITO) electrode layer formed on one surface thereof. Examples of the transparent plastic film may include a PET film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acetate copolymer film, an ethylene-methyl acetate copolymer film, and a polyimide film. Preferably, a PET film is used, without being limited thereto.

Fig. 4 illustrates a touch panel according to another embodiment of the present invention. As shown in Fig. 4, the touch panel 40 may include an antireflective coating 41, a protection film 42, an adhesive layer 12, a plastic film 31a having a conductive layer 31b formed on one surface thereof, and a transparent substrate 43 from the top. Further, the touch panel 40 including such layers may be attached to a display device, such as a liquid crystal display (LCD) 44. In the structure shown in Fig. 4, the adhesive layer 12 including a cured product of the adhesive composition of the present invention may be attached to the conductive layer 31b of a conductive plastic film 31.

In the structure of Fig. 4, there is no particular restriction as to the kinds and formation methods of the other elements than the adhesive layer including the cured product of the adhesive composition of the present invention, and the other elements may be provided in any general structure by any general method.

### [Examples]

Hereinafter, the present invention will be explained in more detail with reference to examples according to the present invention and comparative examples. These examples are provided for illustrative purposes only and are not to be in any way construed as limiting the present invention.

### Preparative Example 1: Preparation of partially polymerized acrylic resin (A)

55 parts by weight of ethylhexyl acrylate (EHA), 20 parts by weight of isobornyl acrylate (IBOA), and 25 parts by weight of 2-hydroxyethyl acrylate (HEA) were placed in a 1L reactor equipped with a reflux condenser for reflux under a nitrogen atmosphere and for easy temperature adjustment and partially polymerized, thereby preparing syrup having a viscosity of 3,500 cps. The partially polymerized acrylic resin (A) has a weight average molecular weight of 1,200,000.

### Example 1

100 parts by weight of the partially polymerized acrylic resin (A) prepared in Preparative Example 1, 0.2 parts by weight of hexanediol diacrylate as a multifunctional crosslinking agent, 0.3 parts by weight of an epoxy silane coupling agent (KBM 403, Shin-Etsu Chemical Co., Ltd.), 1.5 parts by weight of urethane acrylate, and 0.3 parts by weight of a photoinitiator (Irgarcure 651, Ciba Specialty Chemicals Corp.) were mixed into an adhesive composition, from which a coating solution having a viscosity of 1,500 to 2,500 cps was prepared. The coating solution was applied using a bar coater to a release-treated PET film (thickness: 75 µm) to a thickness of 100 µm after UV curing. The product was cured by ultraviolet irradiation for 5 minutes using a UV lamp, thereby forming an adhesive film.

### Example 2 and Comparative Examples 1 to 6

Adhesive films were prepared in the same manner as in Example 1 except that adhesive compositions were prepared according to compositions listed in Table 1.

**TABLE 1**

| | | Example | | Comparative Example | | | | | |
|---|---|---|---|---|---|---|---|---|---|
| | | 1 | 2 | 1 | 2 | 3 | 4 | 5 | 6 |
| Acrylic resin (A) | | 100 | 100 | 100 | 100 | 100 | 100 | 100 | 100 |
| Crosslinking agent | Multifunctional crosslinking agent | 0.2 | 0.2 | 0.2 | 0.2 | 0.2 | - | - | - |
| | Peroxide and epoxy crosslinking agent | - | - | - | - | - | - | - | 0.5 |
| | Isocyanate compound | - | - | - | - | - | - | 0.3 | - |
| Silane coupling agent | KBM 403 | 0.3 | 0.5 | - | - | - | 0.3 | 0.3 | 0.3 |
| | Z6010 | - | - | - | - | 0.5 | - | - | - |
| | Z6020 | - | - | - | 0.3 | - | - | - | - |
| Urethane acrylate | | 1.5 | 1.5 | 1.5 | 1.5 | 1.5 | 1.5 | 1.5 | 1.5 |
| Photoinitiator | | 0.3 | 0.3 | 0.3 | 0.3 | 0.3 | 0.3 | 0.3 | 0.3 |
| Unit: Parts by weight | | | | | | | | | |
| Multifunctional crosslinking agent: Hexanediol diacrylate | | | | | | | | | |
| Peroxide : Di(2-ethylhexyl)peroxydicarbonate | | | | | | | | | |
| Epoxy : Ethylene glycol diglycidyl ether | | | | | | | | | |
| Isocyanate compound: Butylene diisocyanate | | | | | | | | | |
| KBM 403: Epoxy silane coupling agent (Shin-Etsu Chemical Co., Ltd.) | | | | | | | | | |
| Z6010: Amine silane coupling agent (Dow Coming Corp.) | | | | | | | | | |
| Z6020: Amine silane coupling agent (Dow Coming Corp.) | | | | | | | | | |
| Photoinitiator: Irgacure 651, Ciba Specialty Chemicals Corp.) | | | | | | | | | |

Physical properties of the adhesive films prepared in the examples and the comparative example were evaluated as follows.

### 1. Durability

After removing the release film from each of the adhesive films prepared in the examples and the comparative examples, one surface of the adhesive film was attached to a hard coating surface of a hard-coated polycarbonate (PC) film and the other surface thereof was attached to an ITO layer of a PET film having the ITO layer formed on one surface thereof by pressing, thereby preparing a sample (ITO layer of PET film/adhesive film/hard coating surface of PC film). The sample was kept under constant temperature and humidity conditions at 90°C and 90 %RH for 5 days and then evaluated as to durability by observing whether bubbles, separation, and/or peeling occurred.

### <Evaluation of durability>

○: No separation, peeling, and bubbles observed
Δ: Slight separation, peeling, and bubbles observed
X: Remarkable separation, peeling, and bubbles observed

The evaluation results are illustrated in Table 2.

**TABLE 2**

| | Example | | Comparative Example | | | | | |
|---|---|---|---|---|---|---|---|---|
| | 1 | 2 | 1 | 2 | 3 | 4 | 5 | 6 |
| Durability | O | O | X | Δ | Δ | X | Δ | Δ |

As seen from Table 2, Examples 1 and 2 including an epoxy silane coupling agent exhibit excellent durability in that bubbles, peeling or separation does not occur. However, Comparative Example 1, which does not employ a silane coupling agent, suffers substantial separation, while Comparative Examples 2 and 3 including an amine silane coupling agent suffer remarkable occurrence of fine bubbles.

That is, in the examples using the adhesive compositions according to the present invention, the epoxy silane coupling agent is used, thus preventing separation, peeling or bubbles under high-temperature and high-humidity conditions when the adhesive films are attached to the ITO layer and the hard coating surface.

Regarding a crosslinking agent, as compared with Examples 1 and 2 using a multifunctional crosslinking agent, Comparative Example 4 not using a crosslinking agent suffers substantial separation, and Comparative Example 5 using a peroxide and epoxy crosslinking agent and Comparative Example 6 using an isocyanate compound as a crosslinking agent suffer remarkably occurrence of fine bubbles.

That is, in the examples using the adhesive compositions according to the present invention, the multifunctional crosslinking agent is used, thus preventing separation, peeling or bubbles under high-temperature and high-humidity conditions when the adhesive films are attached to the ITO layer and the hard coating surface.

## Claims

1. An adhesive composition for a touch panel comprising:
a partially polymerized acrylic resin;
a multifunctional crosslinking agent; and
an epoxy silane coupling agent.

2. The adhesive composition according to claim 1, wherein the partially polymerized acrylic resin has a weight average molecular weight of 1,000,000 or higher.

3. The adhesive composition according to claim 1, wherein the partially polymerized acrylic resin has a degree of polymerization of 5 to 60%.

4. The adhesive composition according to claim 1, wherein the partially polymerized acrylic resin comprises a polymer of a monomer mixture comprising a (meth)acrylic acid ester monomer and a crosslinking monomer.

5. The adhesive composition according to claim 4, wherein the (meth)acrylic acid ester monomer comprises alkyl (meth)acrylates.

6. The adhesive composition according to claim 4, wherein the crosslinking monomer comprises a hydroxyl group containing monomer, a carboxylic group containing monomer, or a nitrogen containing monomer.

7. The adhesive composition according to claim 1, wherein the multifunctional crosslinking agent comprises multifunctional (meth)acrylates.

8. The adhesive composition according to claim 7, wherein the multifunctional (meth)acrylates comprise at least one selected from the group consisting of hexanediol 1 di(meth)acrylate, trimethylolpropanetrioxyethyl di(meth)acrylate, alkylene glycol di(meth)acrylate, dialkylene glycol di(meth)acrylate, trialkylene glycol di(meth)acrylate, dicyclopentenyl di(meth)acrylate, dicyclopentenyloxyethyl di(meth)acrylate, neopentyl glycol di(meth)acrylate, dipentaerythritolhexa di(meth)acrylate, trimethylolpropane tri(meth)acrylate, and pentaerythritol tri(meth)acrylate.

9. The adhesive composition according to claim 1, wherein the multifunctional crosslinking agent is present in an amount of 0.01 to 10 parts by weight based on 100 parts by weight of the partially polymerized acrylic resin.

10. The adhesive composition according to claim 1, wherein the epoxy silane coupling agent comprises at least one selected from the group consisting of γ-glycidoxypropyltrimethoxysilane, γ-glycidoxypropylmethyldiethoxysilane, γ-glycidoxypropyltriethoxysilane, and 2-(3,4-epoxycyclohexyl)-ethyltrimethoxysilane.

11. The adhesive composition according to claim 1, wherein the epoxy silane coupling agent is present in an amount of 0.1 to 1 part by weight based on 100 parts by weight of the partially polymerized acrylic resin..

12. The adhesive composition according to claim 1, further comprising a photoinitiator.

13. The adhesive composition according to claim 12, wherein the photoinitiator comprises benzoin initiators, hydroxyketone initiators, or aminoketone initiators

14. An adhesive film for a touch panel comprising:
a base film; and
an adhesive layer formed on one side or both sides of the base film and comprising a cured product of the adhesive composition of any one according to claims 1 to 13.

15. The adhesive film according to claim 14, wherein the adhesive layer has a thickness of 50 to 300 µm.

16. The adhesive film according to claim 14, wherein the base film comprises at least one selected from the group consisting of a polyethylene terephthalate (PET) film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acetate copolymer film, an ethylene-methyl acetate copolymer film, and a polyimide film.

17. The adhesive film according to claim 14, wherein the base film has a thickness of 25 to 300 µm.

18. The adhesive film according to claim 14, further comprising a release film formed on the adhesive layer.

19. A touch panel comprising:
a conductive plastic film having a conductive layer formed on one surface thereof; and
an adhesive layer attached to the conductive layer of the conductive plastic film and comprising a cured product of the adhesive composition of any one according to claims 1 to 13.

20. The touch panel according to claim 19, wherein the conductive plastic film comprises a polyethylene terephthalate (PET) film having an indium tin oxide (ITO) layer formed on one surface thereof.
